# FASCICULE DE BREVET EUROPEEN

(11) **EP 3 201 460 B1**
(45) Date de publication et mention de la délivrance du brevet: **18.07.2018**
(21) Numéro de dépôt: 15778367.1
(22) Date de dépôt: 21.09.2015
(51) Int. Cl.: F02K 9/56

(54) **PROCEDE DE SUPPRESSION D'EFFET POGO.**
VERFAHREN ZUR VERMEIDUNG DES POGOEFFEKTS
METHOD FOR AVOIDING THE POGO EFFECT

(30) Priorité: 30.09.2014 FR 1459254
(43) Date de publication de la demande: 09.08.2017
(73) Titulaire: Airbus Safran Launchers SAS, 75015 Paris (FR)
(72) Inventeur: LE GONIDEC, Serge, Daniel, F-27200 Vernon (FR); TOUTIN, Jérémy, F-27200 Vernon (FR); KERNILIS, Alain, F-78840 Freneuse (FR); CRASSOUS, Olivier, F-78280 Guyancourt (FR)
(74) Mandataire: Calvo de Nó, Rodrigo
(86) Numéro de dépôt international: PCT/FR2015/052520
(87) Numéro de publication internationale: WO 2016/051047

(56) Documents cités:
- WO-A2-2012/156615
- FR-A1- 2 161 794
- FR-A1- 2 499 641
- JP-A- H03 287 498
- US-A- 4 039 000

## Description

### Arrière-plan de l'invention

La présente invention concerne un procédé de suppression d'effet POGO à bord d'un engin propulsé par au moins un moteur à réaction alimenté en au moins un ergol liquide. On comprend par « moteur à réaction », dans ce contexte, notamment les moteurs-fusées, et par « engin » tout véhicule piloté ou non-piloté, mais notamment les lanceurs spatiaux.

Dans le domaine aérospatial, et plus particulièrement dans celui des fusées à ergols liquides, on a donné le nom d'effet POGO à l'entrée en résonance d'un ergol liquide dans le circuit d'alimentation d'un moteur à réaction avec des oscillations mécaniques de l'engin propulsé par le moteur à réaction. Comme la poussée du moteur peut varier avec le débit de propergol fourni par le circuit d'alimentation, une telle entrée en résonance peut causer des oscillations rapidement divergentes, et donc donner lieu à des difficultés de guidage, et même à des dommages pouvant aller jusqu'à la perte totale de sa charge utile, voire du véhicule. Le nom d'effet POGO ne provient pas d'un acronyme, mais des « pogo sticks » ou échasses sauteuses, jouets formés par une tige à ressort dont les bonds ont rappelé aux techniciens les oscillations longitudinales violentes des fusées provoquées par cet effet. Depuis le début du développement des fusées à propergols liquides, il s'est donc révélé très important de prendre des mesures de suppression de cet effet POGO. Dans le contexte de la présente description, on entend par « suppression » tant une suppression totale qu'une réduction partielle.

Deux types principaux de systèmes correcteurs d'effet POGO sont connus de la personne du métier, les systèmes passifs et les systèmes actifs. Avec les systèmes passifs, les fréquences de résonance hydraulique sont changées de sorte à ce qu'elles ne puissent pas coïncider avec les fréquences de résonance mécanique de la fusée. Elles peuvent en outre être amorties. Ceci se fait, par exemple, en installant des accumulateurs hydrauliques dans le circuit d'alimentation en propergol. Un tel accumulateur hydraulique est normalement formé par un volume pressurisé comportant du gaz et du liquide en communication avec le circuit d'alimentation. L'accumulateur hydraulique fonctionne comme un système masse-ressort-amortisseur, dans lequel la masse est la masse de liquide dans l'accumulateur, le ressort est formé par le gaz, et l'amortissement provient de la viscosité du liquide entrant et sortant de l'accumulateur par un conduit restreint. Dans un circuit électrique équivalent, un tel accumulateur hydraulique correspondrait à un condensateur avec une capacité fixe. Les paramètres de compressibilité et amortissement d'un tel accumulateur sont sensiblement constants, ou au moins ne peuvent pas être commandés. Par contre, avec les systèmes actifs, on crée une oscillation antagoniste de pression-débit dans le circuit d'alimentation, venant s'opposer aux oscillations mesurées dans le circuit.

Toutefois, tant les systèmes passifs que les systèmes actifs présentent des inconvénients. Les systèmes passifs ne conviennent pas dans le cas de fusées présentant une forte variabilité de leurs fréquences de résonance mécaniques, puisqu'ils n'amortissent pas les modes en-dehors d'une bande étroite autour des fréquences pour lesquelles ils ont été dimensionnés. En cas d'écart entre les prévisions de dynamique et la dynamique réelle du vol de la fusée, ils ne sont pas en mesure de se corriger. Quant aux systèmes actifs, ils sont susceptibles de n'avoir que localement des effets positifs et peuvent générer ailleurs des effets locaux ou globaux négatifs.

Pour éviter ces inconvénients, la demande internationale de brevet WO 2012/156615 a divulgué plusieurs dispositifs et procédés de suppression d'effet POGO, grâce auxquels il est possible de faire varier les fréquences de résonance hydraulique dans le système d'alimentation pour maintenir une distance avec les fréquences de résonance mécanique pendant tout le vol de l'engin. En particulier, ce document antérieur divulguait l'utilisation, dans un système d'alimentation d'un moteur à réaction en au moins un ergol, d'un accumulateur hydraulique permettant de sélectionner entre plusieurs paliers de fonctionnement prédéterminés correspondant chacun à un volume différent de gaz dans l'accumulateur hydraulique. Dans un circuit électrique analogue, un tel accumulateur électrique correspondrait à un condensateur à capacité variable entre plusieurs paliers prédéterminés. Toutefois, suivant le procédé divulgué dans ce document, dans certains cas, au moins une fréquence de résonance hydraulique peut croiser brièvement une fréquence de résonance mécanique pour passer d'un premier palier, qui n'est plus suffisamment distant de la fréquence de résonance mécanique, à un deuxième palier, suffisamment distant de la fréquence de résonance mécanique, mais situé du côté opposé de la courbe de la fréquence de résonance mécanique. Si un tel croisement transitoire et rapide de fréquences de résonance ne peut normalement pas déclencher une résonance, il convient néanmoins de les éviter.

### Objet et résumé de l'invention

La présente invention vise à remédier à ces inconvénients. L'invention vise à proposer un procédé selon la revendication 1 qui permette de supprimer l'effet POGO de manière plus effective en évitant en grande mesure le croisement même transitoire de fréquences de résonance hydrauliques et mécaniques.

Dans au moins un mode de réalisation, ce but est atteint grâce au fait qu'après les étapes suivantes :
- calcul d'une fréquence de résonance hydraulique actuelle pour chaque mode d'un ensemble de modes de résonance hydraulique dudit système d'alimentation avec un palier en cours dudit accumulateur parmi lesdits paliers prédéterminés ;
- calcul d'une fréquence de résonance hydraulique alternative pour chaque mode dudit ensemble de modes de résonance hydraulique dudit système d'alimentation avec chaque palier des paliers prédéterminés alternatif au palier en cours ; et
- calcul d'une différence actuelle entre chaque fréquence de résonance hydraulique actuelle et une fréquence de résonance mécanique actuelle pour chaque mode d'un ensemble de modes de résonance mécanique d'une structure dudit engin ;
si un premier critère de référence n'est pas rempli par l'ensemble des différences actuelles, un ensemble de différences entre chaque fréquence de résonance hydraulique alternative et chaque fréquence de résonance mécanique actuelle est calculé pour chaque palier alternatif et, si ledit premier critère de référence est rempli par chaque ensemble de différences d'une pluralité de paliers alternatifs, on commande une transition de l'accumulateur hydraulique du palier en cours à un palier alternatif, sélectionné parmi lesdits paliers alternatifs pour lesquels le premier critère de référence est rempli, et pour lequel aucune fréquence de résonance hydraulique ne croise aucune fréquence de résonance mécanique actuelle pendant la transition.

Dans le présent contexte, on entend « ensemble » dans un sens large, couvrant non seulement une pluralité, mais aussi un ensemble unitaire.

Grâce à ces dispositions, si l'accumulateur hydraulique offre au moins un palier alternatif remplissant le premier critère de référence et pouvant être atteint sans croisement de fréquences, c'est ce palier qui va être sélectionné, évitant ainsi un croisement présentant un risque même réduit d'entrée en résonance.

Dans certains cas, il peut aussi s'avérer que le premier critère de référence soit rempli par chaque ensemble de différences d'une pluralité des paliers alternatifs pouvant être atteints sans aucun croisement de fréquences. Dans ces cas, ladite transition pourrait être commandée vers un palier alternatif, sélectionné parmi ceux pour lesquels le premier critère de référence est rempli et vers lesquels la transition n'implique aucun croisement de fréquences, pour lequel un paramètre comparatif, calculé en fonction de l'ensemble de différences correspondant, présente une valeur maximale, permettant ainsi une optimisation supplémentaire du choix du palier alternatif vers laquelle la transition va s'opérer. Ce paramètre comparatif peut être, par exemple, la différence minimale parmi ledit ensemble de différences, la somme dudit ensemble de différences, ou bien le module d'un vecteur dont les composantes seraient ledit ensemble de différences.

Même avec ce paramètre comparatif, il peut s'avérer que le premier critère de référence soit rempli par chaque ensemble de différences d'une pluralité de paliers alternatifs pouvant être atteints sans aucun croisement de fréquences et dont le paramètre comparatif présente la même valeur maximale. Dans ce cas, il serait encore possible de départager ces paliers alternatifs en utilisant un ordre de préférence prédéterminé et commandant ainsi la transition vers un palier alternatif ayant un rang maximal selon un ordre prédéterminé, parmi ceux pour lesquels le premier critère de référence est rempli, vers lesquels la transition n'implique aucun croisement de fréquences, et présentant la même valeur maximale du paramètre comparatif.

Alternativement, il peut aussi s'avérer que le premier critère de référence ne soit pas rempli par l'ensemble des différences actuelles mais soit rempli par l'ensemble de différences pour un seul palier alternatif. Dans ce cas, une transition de l'accumulateur hydraulique pourrait être commandée vers le seul palier alternatif remplissant complètement le premier critère de référence.

Ledit premier critère de référence peut être que chacune des différences dudit ensemble des différences soit supérieure à un seuil prédéterminé. Il peut également s'avérer que ledit premier critère de référence ne soit rempli pour aucun palier, en cours ou alternatif, mais qu'un deuxième critère de référence, moins contraignant, soit rempli pour un ensemble de paliers alternatifs. Dans ce cas, une transition de l'accumulateur hydraulique pourrait être commandée vers un palier alternatif, sélectionné parmi l'ensemble de paliers alternatifs pour lequel le deuxième critère de référence est rempli, pour lequel un paramètre comparatif, calculé en fonction de l'ensemble de différences correspondant, présente une valeur maximale. Comme dans le cas précédemment mentionné, ce paramètre comparatif pourrait être, par exemple, la différence minimale parmi ledit ensemble de différences, la somme dudit ensemble de différences, ou bien le module d'un vecteur dont les composantes seraient ledit ensemble de différences.

Ledit deuxième critère de référence peut être que chacune des différences dudit ensemble des différences soit supérieure à un seuil prédéterminé, qui pourrait être une fraction du seuil correspondant au premier critère. Finalement, il peut également s'avérer qu'aucun desdits premier ou deuxième critère de référence ne soit rempli pour aucun palier, en cours ou alternatif. Dans ce cas, une transition alternée pourrait commandée entre au moins deux de ces paliers, en cours et alternatifs, de manière à éviter une proximité trop prolongée dans le temps des mêmes couples de fréquence de résonance hydraulique et fréquence de résonance mécanique, proximité pouvant déclencher des phénomènes de résonance.

Si ledit premier critère de référence est rempli par chaque ensemble de différences d'une pluralité de paliers alternatifs, il peut être déterminé que, pendant la transition de l'accumulateur hydraulique du palier en cours à un palier alternatif sélectionné parmi lesdits paliers alternatifs pour lesquels le premier critère de référence est rempli, aucune fréquence de résonance hydraulique ne croisera aucune fréquence de résonance mécanique actuelle, en déterminant d'abord, pour chaque mode dudit ensemble de modes de résonance hydraulique, une fréquence de résonance hydraulique minimum et une fréquence de résonance hydraulique maximum parmi la fréquence de résonance hydraulique pour la capacité actuelle et la fréquence de résonance hydraulique pour le palier alternatif sélectionné, et en comparant, ensuite, pour chaque mode dudit ensemble de modes de résonance hydraulique, la fréquence de résonance hydraulique minimale et la fréquence de résonance hydraulique maximale avec la fréquence de résonance mécanique actuelle pour chaque mode de résonance mécanique dudit ensemble de modes de résonance mécanique, aucune fréquence de résonance hydraulique ne pouvant croiser aucune fréquence de résonance mécanique actuelle pendant la transition au palier alternatif sélectionné si, pour aucun desdits modes de résonance hydraulique et mécanique, la fréquence de résonance hydraulique minimale est inférieure à la fréquence de résonance mécanique et la fréquence de résonance hydraulique maximale est supérieure à la fréquence de résonance mécanique.

La présente divulgation concerne aussi un engin selon la revendication 10 comprenant au moins un moteur à réaction, et un système d'alimentation dudit moteur en au moins un ergol liquide, ledit système d'alimentation étant équipé d'un accumulateur hydraulique, permettant de sélectionner entre plusieurs paliers de fonctionnement prédéterminés correspondant chacun à un volume différent de gaz dans l'accumulateur hydraulique, et d'une unité de commande configurée pour effectuer le procédé de suppression d'effet POGO susmentionné. Par ailleurs, l'unité de commande peut être une unité de commande programmable, et cette divulgation concerne donc aussi un programme informatique pour mettre en oeuvre ce procédé de suppression d'effet POGO, ainsi qu'un support de stockage de données contenant un tel programme de manière lisible par une unité électronique de traitement de données, et une unité électronique de traitement de données programmée pour mettre en oeuvre ce procédé. On entend par « support de stockage de données » aussi toute forme de mémoire, vive ou morte, pouvant contenir des données sous une forme lisible par un ordinateur, y compris les supports optiques, magnétiques et/ou électroniques.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est un schéma, construit au moyen de l'analogie hydraulique-électrique, d'un véhicule à moteur-fusée avec un système d'alimentation en propergol liquide selon un mode de réalisation de l'invention ;
- les figures 2A et 2B présentent des coupes transversales d'un accumulateur hydraulique à volume de gaz variable installé en dérivation d'un circuit d'alimentation du système de la figure 1 ;
- les figures 3A et 3B sont des graphiques illustrant l'évolution du volume de gaz et des fréquences de résonance hydraulique du système d'alimentation de la figure 1 suivant le passage de l'accumulateur hydraulique figure 2 par plusieurs paliers de niveau ;
- la figure 4 illustre le croisement d'une fréquence de résonance hydraulique avec une fréquence de résonance mécanique lors de la transition d'un desdits paliers à un autre ;
- la figure 5 est un diagramme fonctionnel d'une unité de commande de l'accumulateur hydraulique ;
- la figure 6 est un ordinogramme illustrant un algorithme de détection de croisement de fréquences ; et
- les figures 7 et 8 sont des ordinogrammes illustrant, respectivement, une première et une deuxième partie d'un algorithme gouvernant un procédé de suppression d'effet POGO.

### Description détaillée de l'invention

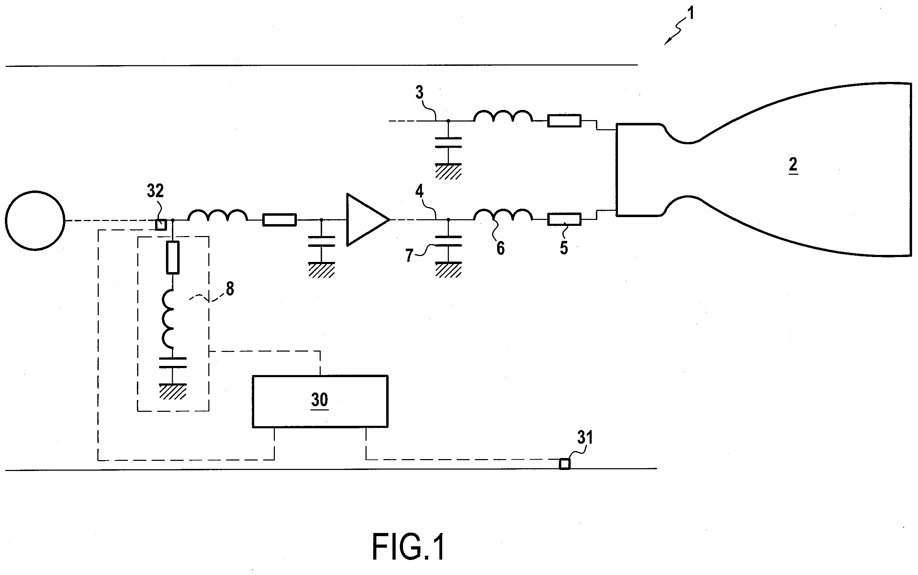

L'engin 1 représenté sur la figure 1 comporte un moteur à réaction 2 intégrant une chambre de combustion et une tuyère convergente-divergente. L'engin 1 comporte aussi un système d'alimentation 3, 4 pour chacun de deux ergols liquides et chimiquement réactifs alimentant ce moteur à réaction 2. Le premier système d'alimentation 3 est illustré seulement de façon partielle. Chaque système d'alimentation 3, 4 rempli de fluide représente un système dynamique qui peut être modélisé comme un circuit électrique comportant des résistances 5, inductances 6 et capacitances 7 et qui présente normalement plusieurs modes de résonance hydraulique, chacun avec une fréquence de résonance hydraulique fh.

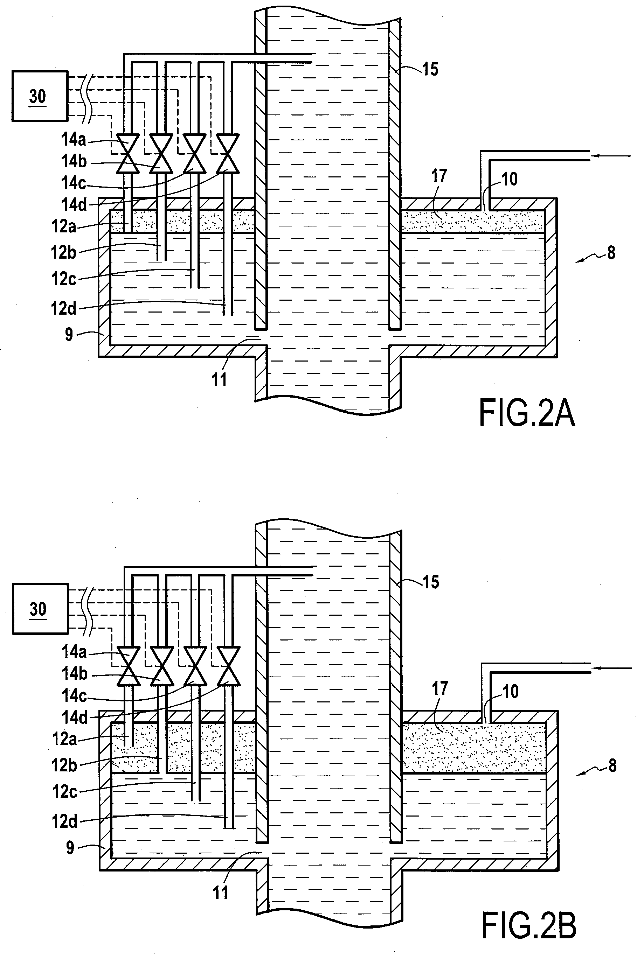

Afin de faire varier au moins une fréquence de résonance du deuxième circuit d'alimentation 4, celui-ci comporte, en dérivation du circuit, un accumulateur hydraulique 8 à volume de gaz variable, et donc à compressibilité aussi variable. Cet accumulateur 8, illustré sur les figures 2a et 2b, comporte un réservoir 9 avec, d'un côté, un point 10 d'alimentation en gaz sous pression, et d'un côté opposé, une connexion 11 à un conduit 15 du deuxième circuit d'alimentation 4. A des niveaux différents entre le point 10 et la connexion 11, des tubes plongeurs 12a à 12d relient le réservoir 9 avec le conduit 15. Dans chaque tube plongeur 12a à 12d, une vanne 14a à 14d est interposée entre le réservoir 9 et le conduit 15. Les vannes 14a à 14d sont toutes connectées à une unité de commande 30 pour commander leur ouverture et fermeture. L'ouverture et la fermeture des vannes 14a à 14d permettent de faire varier le niveau de liquide, et donc le volume de gaz 17, dans le réservoir 9, tel qu'il est illustré sur les figures 2a et 2b. Dans la figure 2a, la vanne 14a du tube plongeur 12a plus court est ouverte, tandis que les vannes 14b à 14d des autres tubes plongeurs 12b à 12d sont fermées. La surface libre du liquide est ainsi stabilisée au niveau de l'entrée du tube plongeur 12a, et le volume de gaz 17 ainsi que la compressibilité restent ainsi comparativement limités. Dans la figure 2b, la vanne 14a du tube plongeur 12a est par contre fermée, et c'est la vanne 14b du tube plongeur suivant 12b qui est ouverte. La surface libre du liquide est ainsi stabilisée au niveau, plus bas, de l'entrée du tube plongeur 12b, et le volume de gaz 17 ainsi que la compressibilité augmentent en conséquence. On peut encore augmenter la capacité de l'accumulateur hydraulique 8 par paliers consécutifs en ouvrant les autres vannes 14c et 14d.

La structure de l'engin 1 peut normalement vibrer suivant une pluralité de modes de résonance mécanique, chacun associé à une fréquence de résonance mécanique fm. En vol, ces fréquences de résonance mécanique fm évoluent dans le temps, notamment à cause de la vidange progressive des réservoirs d'ergols servant à alimenter la chambre de combustion 2. Même si les fréquences de résonance hydraulique fh et les fréquences de résonances mécanique fm sont initialement assez éloignées les unes des autres pour éviter l'effet POGO, dans certaines circonstances l'évolution des fréquences de résonance mécanique fm pourrait les rapprocher aux fréquences de résonance hydraulique fh jusqu'à déclencher cet effet, si ces dernières restaient inchangées.

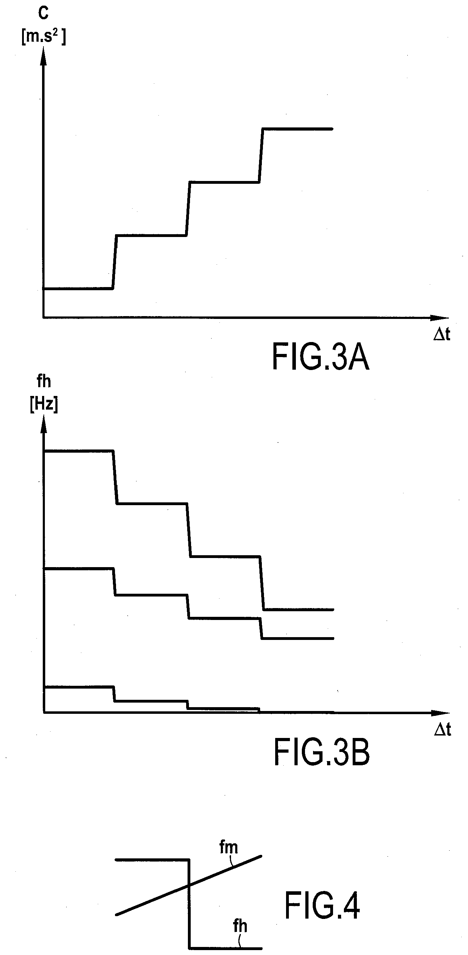

Comme les quatre tubes plongeurs 14a à 14d permettent de choisir un palier de fonctionnement parmi un ensemble de quatre paliers prédéterminés correspondant chacun à un volume de gaz différent dans l'accumulateur 8, et de passer de l'une à l'autre des paliers de cet ensemble, il devient donc possible d'adapter, même pendant le fonctionnement du moteur-fusée de l'engin 1, les fréquences de résonance hydraulique fh des différents modes de résonance hydrauliques du deuxième circuit d'alimentation 4, de manière à éviter qu'au moins une d'elles coïncide avec une fréquence de résonance mécanique fm, variable dans le temps, d'un mode de résonance mécanique de la structure de l'engin 1. La figure 3A illustre l'évolution du volume de gaz V dans l'accumulateur 8 suivant le passage par plusieurs paliers successifs du niveau de la surface libre de liquide dans l'accumulateur 8. La figure 3B illustre l'évolution des fréquences de résonance hydraulique fh (en Hertz) correspondant aux trois premiers modes de résonance hydraulique du deuxième circuit d'alimentation 4. On peut y apprécier comment chacune de ces fréquences de résonance hydraulique fh diminue aussi par paliers de manière concomitante à la montée par paliers de la capacité de l'accumulateur 8.

Dans certaines circonstances, lors d'une transition de l'accumulateur hydraulique 8 d'un palier en cours à un palier alternatif parmi l'ensemble des paliers prédéterminés, cette transition visant à augmenter la distance entre les fréquences de résonance hydraulique fh et les fréquences de résonance mécanique fm, au moins une des fréquences de résonance hydraulique fh peut momentanément croiser au moins une des fréquences de résonance mécanique fm, comme illustré sur la figure 4. Bien que la coïncidence entre fréquences de résonance hydraulique et mécanique n'est alors que transitoire, ce qui limite le risque de déclenchement d'effet POGO, il convient en général d'éviter ces croisements.

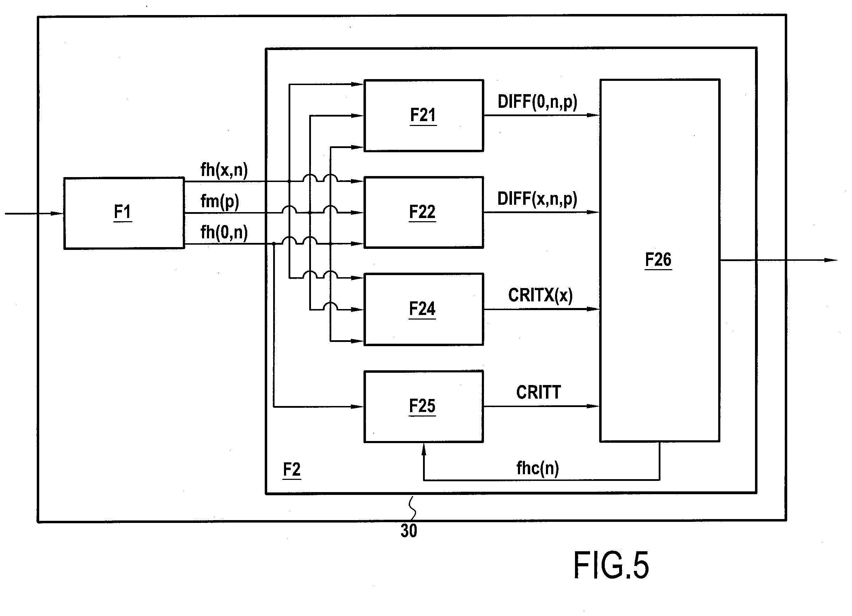

L'unité de commande 30 peut notamment être une unité de traitement de données configurée et/ou programmée pour mettre en oeuvre le procédé de suppression d'effet POGO. En particulier, l'unité de commande 30 peut comprendre une mémoire vive ou morte dans laquelle soit enregistrée une série d'instructions, c'est-à-dire un programme, pour cette mise en oeuvre. La figure 5 est un schéma fonctionnel de l'unité de commande 30, l'illustrant comme un ensemble de modules fonctionnels interconnectés.

Ainsi, cette unité de commande 30 comprend un premier module de calcul F1 pour calculer, à partir de paramètres physiques fournis par des capteurs 31 et/ou estimés à travers d'au moins un modèle de l'engin 1, et pour chaque mode de résonance d'un ensemble de modes de résonance hydrauliques et modes de résonance mécaniques :
- la fréquence de résonance hydraulique fh(0,n) du système d'alimentation 4 correspondant au palier en cours, c'est-à-dire avec le volume de gaz actuel de l'accumulateur 8, pour chaque mode de résonance n d'un ensemble de N modes de résonance hydrauliques ;
- la fréquence de résonance mécanique actuelle fm(p) de la structure de l'engin 1 pour chaque mode de résonance p d'un ensemble de P modes de résonance mécaniques ;
- les fréquences de résonance hydraulique fh(x,n) du système d'alimentation 4 correspondant à chaque palier x des autres X paliers disponibles, c'est-à-dire avec chacun des niveaux alternatifs de l'accumulateur 8, parmi l'ensemble de niveaux prédéterminés, pour le même mode de résonance n parmi

l'ensemble N des modes de résonance hydrauliques. Eventuellement, le premier module de calcul F1 peut également calculer des intervalles d'incertitude pour chacune de ces fréquences.

L'unité de commande 30 comprend aussi un module de décision F2 pour commander un changement de palier sur la base des valeurs calculées par le premier module de calcul F1. Comme illustré sur la figure 5, ce module de décision F2 peut être décomposé à son tour en plusieurs autres modules fonctionnels, dont un deuxième module de calcul F21 pour calculer les différences DIFF(0,n,p) entre chaque fréquence de résonance hydraulique actuelle fh(0,n) et chaque fréquence de résonance mécanique actuelle fm(p) un troisième module de calcul F22 pour calculer les différences DIFF(x,n,p) entre chaque fréquence de résonance hydraulique alternative fh(x,n) et chaque fréquence de résonance mécanique actuelle fm(p), un module F24 de détection de croisement de fréquences, un module F25 de détection de changement de palier en cours et un module F26 de sélection de palier. Pour le calcul des différences actuelles DIFF(0,n,p) et alternatives DIFF(x,n,p) pour chaque mode de résonance hydraulique n et chaque mode de résonance mécanique p, les deuxième et troisième modules de calcul F21, F22 peuvent prendre en compte les intervalles d'incertitude éventuellement fournis par le premier module de calcul F1.

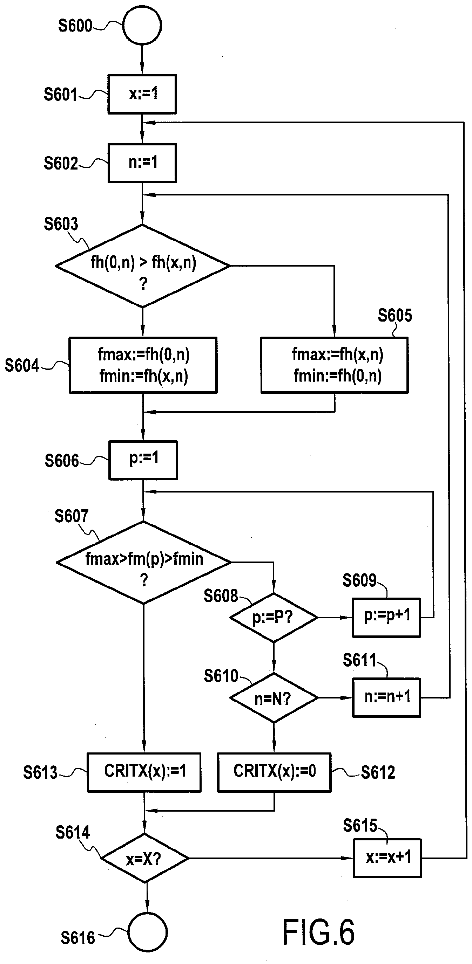

Le module F24 de détection de croisement des fréquences est conçu pour déterminer pour quelles transitions, parmi l'ensemble des transitions potentielles à partir du palier en cours, vers les différents paliers alternatifs de l'accumulateur hydraulique 8, aucune des fréquences hydrauliques fh ne croiserait aucune des fréquences mécaniques fm. Pour cela, dans ce module F24 de détection de croisement des fréquences, l'algorithme suivant, illustré par l'ordinogramme de la figure 6, est mis en oeuvre :
Suite au départ S600 de cet algorithme, les compteurs x et n sont initialisés, chacun avec la valeur 1, dans les étapes correspondantes S601 et S602.

Dans l'étape S603, la fréquence de résonance hydraulique actuelle fh(0,n) est comparée à la fréquence de résonance hydraulique alternative fh(x,n) pour le même mode de résonance hydraulique n. Si la fréquence de résonance hydraulique actuelle fh(0,n) est supérieure à la fréquence de résonance hydraulique alternative fh(x,n), on enregistre, dans l'étape S604, la fréquence de résonance hydraulique actuelle fh(0,n) comme fréquence supérieure fhmax et la fréquence de résonance hydraulique alternative fh(x,n) comme fréquence inférieure fhmin. Par contre, si la fréquence de résonance hydraulique actuelle fh(0,n) n'est pas supérieure à la fréquence de résonance hydraulique alternative fh(x,n), on enregistre, dans l'étape S605, la fréquence de résonance hydraulique actuelle fh(0,n) comme fréquence inférieure fhmin et la fréquence de résonance hydraulique alternative fh(x,n) comme fréquence supérieure fhmax.

Une fois les fréquences inférieure et supérieure fhmin et fhmax sont ainsi enregistrées, le compteur p est initialisé, avec la valeur 1, dans l'étape S606. Ensuite, dans l'étape S607, la fréquence de résonance mécanique actuelle fm(p) est comparée auxdites fréquences inférieure et supérieure fhmin et fhmax, pour déterminer si la fréquence de résonance mécanique actuelle fm(p) est inférieure à la fréquence supérieure fhmax et supérieure à la fréquence inférieure fhmin. Dans le cas contraire, dans l'étape S608, on compare la valeur du compteur p à sa valeur maximale P, c'est-à-dire au nombre P de modes de résonance mécanique à prendre en compte dans cet algorithme. Si cette valeur P n'est pas atteinte, on ajoute dans l'étape S609 une unité au compteur p et on retourne en boucle à l'étape S607 pour comparer aux fréquences inférieure et supérieure fhmin et fhmax la fréquence de résonance mécanique pour le mode de résonance mécanique suivant. Si, par contre, la valeur maximale P du compteur p est bien atteinte, on compare, dans l'étape S610, le compteur n à sa valeur maximale N, c'est-à-dire au nombre N de modes de résonance hydraulique à prendre en compte dans cet algorithme. Si cette valeur N n'est pas atteinte, on ajoute dans l'étape S611 une unité au compteur n et on retourne en boucle à l'étape S603 pour déterminer les fréquences inférieure et supérieure pour le mode de résonance hydraulique suivant et les comparer ensuite aux fréquences de résonance mécanique. Si, par contre, la valeur maximale N du compteur n est bien atteinte sans que la comparaison de l'étape S607 ait donné un résultat positif pour aucun des N modes de résonance hydraulique et aucun des P modes de résonance mécanique, on enregistre une valeur nulle pour un signal binaire CRITX(x) dans l'étape S612, indiquant de cette manière que le palier alternatif x peut être atteint à partir du palier en cours sans aucun croisement de fréquences.

D'autre part, si dans l'étape S607, la comparaison de la fréquence de résonance mécanique actuelle fm(p) auxdites fréquences inférieure et supérieure fhmin et fhmax donne un résultat positif, on enregistre directement, dans l'étape S613, une valeur 1 pour le signal binaire CRITX(x), sans poursuivre les boucles correspondant aux compteurs n et p.

Après soit l'étape S612, soit l'étape S613, la valeur du compteur x est comparée à sa valeur maximale X dans l'étape S614. On détermine ainsi si l'on a procédé à vérifier chacun des X paliers alternatifs. Dans le cas contraire, on ajoute une unité à la valeur du compteur X dans l'étape S615, et on retourne à l'étape S602 d'initialisation du compteur n. Par contre, si la valeur maximale X est bien atteinte par le compteur x, on procède à la fin S616 de l'algorithme de détection des croisements de fréquences.

Le module F25 de détection de changement de palier en cours est configuré pour détecter si une transition entre paliers est actuellement en cours et génère un signal binaire CRITT avec une valeur nulle si aucune transition est en cours et une valeur de 1 si une telle transition est bien en cours. Pour cela, le module F25 peut par exemple se baser, comme illustré, sur une comparaison entre les valeurs des fréquences de résonance hydraulique actuelles fh(0,n), calculées par le module F1, et des fréquences de résonance hydraulique fhc(n) correspondant au palier actuellement sélectionné par le module F26 de sélection de palier pour les mêmes modes de résonance hydraulique n. La valeur du signal CRITT passera alors de zéro à un dès que les différences entre les valeurs des fréquences de résonance hydraulique actuelles fh(0,n) et celles des fréquences de résonance hydraulique fhc(n) correspondant au palier actuellement sélectionné pour les mêmes modes de résonance hydraulique n dépasseront un seuil d'incertitude, et reviendra à zéro dès que ces différences repasseront sous ce seuil d'incertitude, ou qu'un seuil de temps depuis le début de la transition aura été dépassé. Alternativement, toutefois, la détermination d'un tel état transitoire de changement de palier peut être effectuée d'autres manières, comme par exemple sur base de gradients temporels dans les fréquences de résonance hydraulique actuelles fh(0,n), par observation des vannes 14a à 14d ou de leurs signaux de commande, ou bien par observation du niveau de liquide dans l'accumulateur 8.

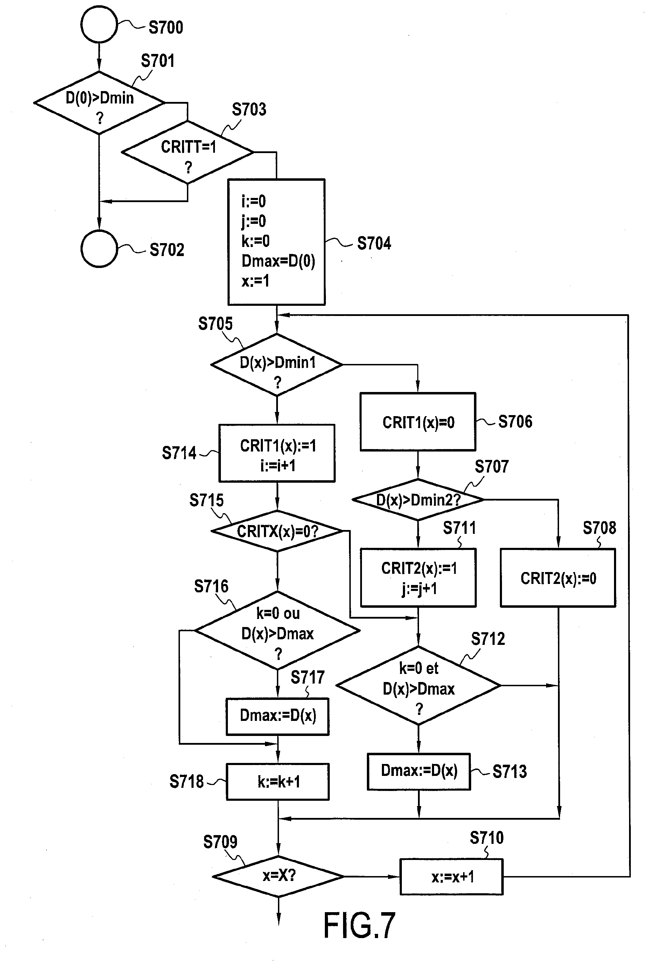

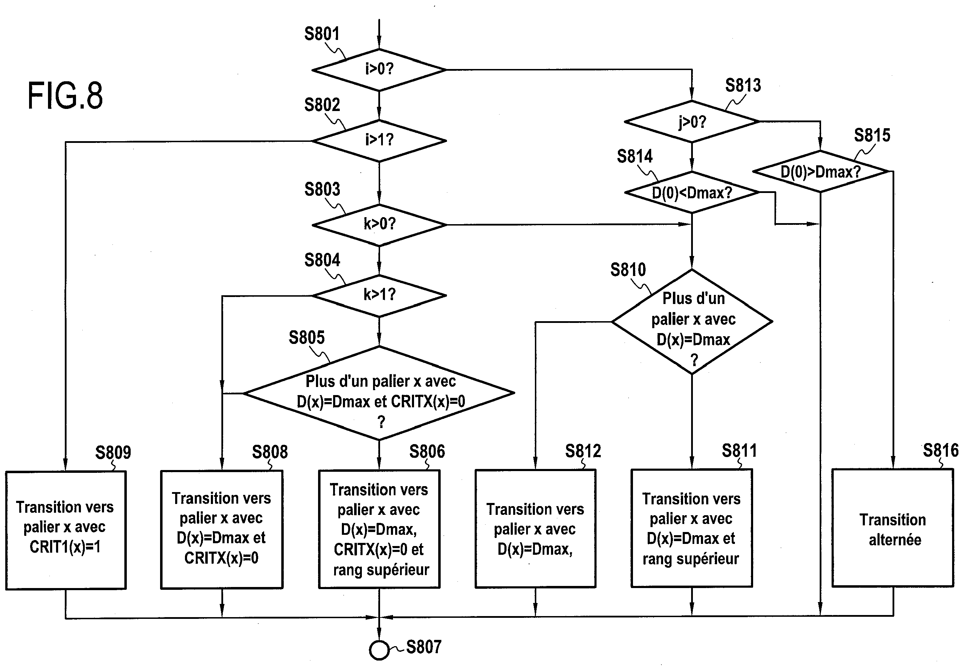

Le module F26 de sélection de palier est configuré pour sélectionner un palier de fonctionnement parmi les X paliers alternatifs et ordonner la transition de l'accumulateur hydraulique 8 vers ce palier alternatif suivant l'algorithme illustré sur les figures 7 et 8, à partir du signal CRITT transmis par le module F25 de détection de changement de palier, des signaux CRITX(x) transmis par le module F24 de détection de croisement de fréquences et des différences actuelles DIFF(0,n,p) et alternatives DIFF(x,n,p) calculées par les deuxième et troisième modules de calcul F21 et F22. Suite au départ S700 de cet algorithme, on vérifie d'abord dans l'étape S701 si un premier critère de référence n'est déjà pas rempli par le palier en cours. Dans le mode de réalisation illustré, ce premier critère de référence est qu'une distance D(0) entre l'ensemble des fréquences de résonance hydraulique actuelles fh(0,n) et l'ensemble des fréquences de résonance mécanique fm(p) soit supérieure à un premier seuil Dmin1. Cette distance D(0) peut par exemple être calculée comme étant la plus petite des différences DIFF(0,n,p). Si le palier en cours remplit ce premier critère de référence, aucune transition de palier n'est nécessaire et l'algorithme est immédiatement interrompu, en passant à la finalisation S702. Par contre, si le palier en cours ne remplit pas ce premier critère de référence, dans l'étape S703 on procède à vérifier que la valeur du signal CRITT, indiquant une transition de palier en cours, ne soit pas égale à 1. Si le signal CRITT indique bien une transition en cours, l'algorithme est aussi interrompu, en passant à l'étape de finalisation S702. Par contre, si la valeur du signal binaire CRITT est nulle, on passe à l'étape d'initialisation S704, dans laquelle les compteurs i, j et k sont initialisés avec une valeur nulle, la valeur d'un paramètre DMAX est initialisée avec la valeur de la distance D(0), et le compteur x est initialisé avec une valeur de 1. Ensuite, dans l'étape S705, on procède à vérifier si le premier critère de référence est rempli par le palier alternatif x, c'est-à-dire, si la distance D(x), calculée de la même manière que la distance D(0), mais sur base des différences alternatives Δf(x,n,p) correspondant au palier x, est supérieure au premier seuil Dmin1.

Si ce premier critère de référence n'est pas rempli par le palier alternatif x, dans l'étape S706 une valeur nulle est assignée au signal binaire CRIT1(x), avant de vérifier dans l'étape S707 si le palier x remplit au moins un deuxième critère de référence moins contraignant. Dans le mode de réalisation illustré, ce deuxième critère de référence est que la valeur de la distance D(x) soit au moins supérieure à un deuxième seuil Dmin2 inférieur au premier seuil. Toutefois, des critères alternatifs peuvent être aussi envisagés pour ce deuxième critère de référence. Si ce deuxième critère de référence n'est pas non plus rempli par le palier alternatif x, une valeur nulle est assignée au signal binaire CRIT2(x) et on passe à l'étape S709, dans laquelle on vérifie si la valeur du compteur x est déjà égale au nombre X de paliers alternatifs. Si ce n'est pas encore le cas, une unité est ajoutée au compteur x dans l'étape S710 et on retourne en boucle à l'étape S705. Alternativement, si le deuxième critère de référence a bien été rempli dans l'étape S707, dans l'étape S711 la valeur 1 est assignée au signal CRIT2(x) pour le palier x et une unité est ajoutée au compteur j. Ensuite, dans l'étape S712 on vérifie si le compteur k est encore à zéro et si la distance D(x) est supérieure à la valeur assignée au paramètre DMAX. Si les deux conditions sont remplies, dans l'étape S713 la valeur de la distance D(x) pour le palier x est assignée à ce paramètre DMAX avant de passer à l'étape S709. Sinon, on passe directement à l'étape S709.

Si le premier critère de référence est bien rempli par le palier alternatif x dans l'étape S705, dans l'étape S714 une valeur de 1 est assignée au signal CRIT1(x) et une unité est ajoutée au compteur i. Ensuite, dans l'étape S715, on vérifie à travers la valeur du signal CRITX(x) qu'une transition vers le palier alternatif x soit possible sans croisement de fréquences. Si la valeur du signal CRITX(x) n'est pas nulle, ce qui indique que la transition vers le palier alternatif x implique au moins un croisement de fréquences, on passe à l'étape S712 précédemment décrite. Par contre, si dans l'étape S715 on vérifie que la valeur du signal CRITX(x) est bien nulle, indiquant ainsi qu'une transition vers le palier alternatif x est bien possible sans croisement de fréquences, on vérifie dans l'étape S716 si la valeur du compteur k est encore égale à zéro ou la distance D(x) supérieure à la valeur du paramètre comparatif DMAX. Si au moins une de ces deux conditions est remplie, indiquant ainsi que ce palier alternatif x est soit le premier vers lequel la transition peut être effectuée sans croisement de fréquences, soit celui présentant pour l'instant la distance D(x) la plus élevée parmi ceux vers lesquels on a déjà vérifié que la transition peut être effectuée sans croisement de fréquences, dans l'étape S717 on assigne la valeur de la distance D(x) au paramètre DMAX, avant de passer à l'étape S718 dans laquelle on ajoute une unité au compteur k, pour ensuite passer à l'étape S709 précédemment décrite. Par contre, si aucune des conditions vérifiées dans l'étape S716 n'est remplie, on passe directement à l'étape S718 sans passer par l'étape S717.

Donc, à chaque boucle entre les étapes S705 et S709, si un palier alternatif x remplit la condition CRITX(x)=0, suivant laquelle la transition est possible sans croisement de fréquences, la valeur de la distance D(x) correspondante est assignée dans l'étape S716 au paramètre DMAX si le premier critère comparatif est rempli et que la valeur du compteur k est nulle ou la valeur de la distance D(x) supérieure à la valeur précédente du paramètre DMAX, tandis que si un palier alternatif x ne remplit pas la condition CRITX(x)=0, la valeur de la distance D(x) correspondante n'est assignée au paramètre DMAX dans l'étape S713 que si le premier ou au moins le deuxième critère de référence est rempli, que la valeur de la distance D(x) correspondante est supérieure à la valeur précédente du paramètre DMAX et que le compteur k est encore à zéro, ce qui veut dire qu'aucun palier alternatif x n'a encore rempli la condition CRITX(x)=0.

En conséquence, à la fin de cette première partie de l'algorithme, quand la condition de l'étape S709 est finalement remplie et que tous les X paliers alternatifs ont donc été pris en considération, la valeur du paramètre DMAX correspondra soit à celle de la plus grande des distances D(x) parmi l'ensemble des paliers alternatifs remplissant le premier (et donc aussi le deuxième) critère de référence ainsi que la condition CRITX(x)=0, et donc accessibles sans croisement de fréquences, soit à celle de la plus grande des distances D(x) parmi l'ensemble des paliers alternatifs remplissant au moins un des premier et deuxième critères de référence et de la distance D(0) correspondant au palier en cours, si aucun des paliers alternatifs ne remplit le premier [CDNR1]critère de référence et la condition CRITX(x)=0.

La deuxième partie de l'algorithme mis en oeuvre par le module F26 de sélection de palier est illustrée sur la figure 8. Si dans l'étape S709 on a vérifié avoir atteint déjà le dernier des X paliers alternatifs, l'état du compteur i est vérifié dans les étapes S801 et S802. Si dans ces étapes S801 et S802 il est vérifié que la valeur du compteur i est, respectivement, supérieure à zéro et à un, indiquant ainsi qu'une pluralité des paliers alternatifs remplit le premier critère de référence, on procède à vérifier l'état du compteur k dans les étapes S803 et S804. Si dans ces étapes S803 et S804 il est vérifié que la valeur du compteur k est, respectivement, supérieure à zéro et à un, indiquant ainsi que plusieurs paliers alternatifs, parmi ceux remplissant le premier critère de référence, peuvent être atteints sans croisement de fréquence, on vérifie, dans l'étape S805, si la valeur de la distance D(x) est égale à celle du paramètre DMAX pour plus d'un palier alternatif x pour lequel la valeur du signal CRITX(x) est nulle. Si c'est bien le cas, dans l'étape S806 le module F26 de sélection de palier sélectionne, parmi la pluralité de paliers alternatifs x pour lesquels D(x)=DMAX et CRITX(x)=0, celui ayant le rang le plus élevé suivant un ordre prédéterminé, et procède à commander la transition vers ce palier sélectionné, pour ensuite passer à la finalisation S807 de l'algorithme. Par contre, si dans l'étape S805 il a été constaté que la valeur de la distance D(x) n'était égale à celle assignée au paramètre DMAX que pour un seul palier alternatif x parmi ceux pour lesquels la valeur du signal CRITX(x) était nulle, ou dans l'étape S804 il a été constaté que la valeur du compteur k n'est pas supérieure à un, ce qui implique qu'un seul palier alternatif x remplit la condition CRITX(x)=0 et donc aussi D(x)=DMAX, dans l'étape S808 le module F26 procède à commander la transition vers le seul palier alternatif x remplissant les deux conditions D(x)=DMAX et CRITX(x)=0, pour ensuite procéder à la finalisation S807.

Par ailleurs, si dans l'étape S802 il a été constaté que la valeur du compteur i n'est pas supérieure à l'unité, ce qui indique qu'un seul palier alternatif x remplit le premier critère de référence, dans l'étape S809 le module F26 procède à commander la transition vers le seul palier alternatif x remplissant cette condition CRIT1(x)=1, pour ensuite procéder à la finalisation S807.

Le paramètre comparatif, c'est-à-dire la distance D(x) dans le mode de réalisation illustré, et l'ordre prédéterminé des paliers alternatifs x peuvent aussi être employés pour départager plusieurs paliers alternatifs x remplissant le premier ou le deuxième critère de référence quand aucun n'est accessible sans croisement de fréquences. Ainsi, si dans l'étape S802 il a été constaté que la valeur du compteur i est supérieure à l'unité, ce qui indique que plusieurs paliers alternatifs x remplissent le premier critère de référence, mais que dans l'étape S803 il a été constaté que la valeur du compteur k est resté nulle, ce qui indique qu'aucun de ces paliers alternatifs x ne peut être atteint sans croisement de fréquences, on procède à l'étape S810, dans laquelle il est vérifié si plus d'un palier alternatif x présente une distance D(x) égale à celle assignée au paramètre DMAX. En cas affirmatif, dans l'étape S811 le module F26 procède à commander la transition de l'accumulateur 8 vers le palier alternatif x avec une distance D(x) égale à la valeur du paramètre DMAX et rang supérieur, pour ensuite procéder à la finalisation S807. En cas négatif, dans l'étape S812, le module F26 procède à commander la transition de l'accumulateur 8 vers le seul palier alternatif x dont la valeur de la distance D(x) est donc égale à la valeur du paramètre DMAX, pour ensuite procéder à la finalisation S807. L'étape S810 est aussi atteinte si dans l'étape S801 il a été constaté que la valeur du compteur i est resté nulle, ce qui indique qu'aucun palier alternatif x ne remplit le premier critère de référence, et renvoie à un premier mode de fonctionnement dégradé, mais que dans l'étape suivante S813 il est constaté que la valeur du compteur j n'est pas nulle, ce qui signifie qu'au moins un palier alternatif x remplit le deuxième critère de référence, et qu'ensuite il est constaté dans l'étape S814 que la distance D(0) correspondant au palier en cours est inférieure à la valeur du paramètre DMAX, correspondant à la plus grande des distances D(x) parmi les paliers alternatifs x.

Par contre, si dans l'étape S814 on constate que la distance D(0) correspondant au palier en cours n'est pas inférieure à la valeur du paramètre DMAX après la première partie de cet algorithme, ou bien si dans l'étape S813 il a été constaté que la valeur du compteur j est restée nulle, et qu'aucun palier alternatif ne remplit donc même le deuxième critère de référence et qu'il est ensuite constaté dans l'étape S815 que le palier en cours remplit bien ce deuxième critère de référence, le module F26 passe alors directement à la finalisation S807 de l'algorithme sans commander aucune transition de palier.

Finalement, si dans l'étape S815 il a été constaté que le palier en cours ne remplit pas non plus le deuxième critère de référence, le module F26 est renvoyé à un deuxième mode de fonctionnement dégradé, dans lequel, dans l'étape S816, il commande une transition rapidement alternée entre au moins deux paliers différents pour essayer d'éviter encore le déclenchement de l'effet POGO malgré la proximité des fréquences de résonance hydraulique et mécanique.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications.

## Revendications

1. Procédé de suppression d'effet POGO sur un engin (1) comprenant au moins un moteur à réaction (2) et un système d'alimentation (4) dudit moteur (2) en au moins un ergol liquide, ledit système d'alimentation étant équipé d'un accumulateur hydraulique (8) permettant de sélectionner entre plusieurs paliers de fonctionnement prédéterminés correspondant chacun à un volume différent de gaz dans l'accumulateur hydraulique (8), le procédé comprenant les étapes suivantes :
calculer une fréquence de résonance hydraulique actuelle pour chaque mode d'un ensemble de modes de résonance hydraulique dudit système d'alimentation (4) avec un palier en cours dudit accumulateur (8) parmi lesdits paliers prédéterminées ;
calculer une fréquence de résonance hydraulique alternative pour chaque mode dudit ensemble de modes de résonance hydraulique dudit système d'alimentation (4) avec chaque palier des paliers prédéterminés alternatif au palier en cours ;
calculer une différence actuelle entre chaque fréquence de résonance hydraulique actuelle et une fréquence de résonance mécanique actuelle pour chaque mode d'un ensemble de modes de résonance mécanique d'une structure dudit engin et, si un premier critère de référence n'est pas rempli par l'ensemble des différences actuelles :
calculer un ensemble de différences entre chaque fréquence de résonance hydraulique alternative et chaque fréquence de résonance mécanique actuelle pour chaque palier alternatif et, si ledit premier critère de référence est rempli par chaque ensemble de différences d'une pluralité de paliers alternatifs :
commander une transition de l'accumulateur hydraulique (8) du palier en cours à un palier alternatif, sélectionné parmi lesdits paliers alternatifs pour lesquels le premier critère de référence est rempli, et pour lequel aucune fréquence de résonance hydraulique ne croise aucune fréquence de résonance mécanique actuelle pendant la transition.

2. Procédé de suppression d'effet POGO suivant la revendication 1, dans lequel, si l'accumulateur hydraulique (8) peut passer du palier en cours à l'un quelconque de plusieurs paliers alternatifs, parmi ceux pour lesquelles le premier critère de référence est rempli, sans qu'aucune fréquence de résonance hydraulique ne croise aucune fréquence de résonance mécanique actuelle pendant la transition, ladite transition est commandée vers un palier alternatif, sélectionné parmi ceux pour lesquels le premier critère de référence est rempli et vers lesquels la transition n'implique aucun croisement de fréquences, et pour lequel un paramètre comparatif, calculé en fonction de l'ensemble de différences correspondant, présente une valeur maximale.

3. Procédé de suppression d'effet POGO suivant la revendication 2, dans lequel, si une pluralité de paliers alternatifs, parmi ceux pour lesquels le premier critère de référence est rempli et vers lesquels la transition n'implique aucun croisement de fréquences, présentent une même valeur maximale dudit paramètre comparatif, ladite transition est commandé vers un palier alternatif ayant un rang maximal selon un ordre prédéterminé, parmi ceux pour lesquels le premier critère de référence est rempli, vers lesquels la transition n'implique aucun croisement de fréquences, et présentant la même valeur maximale du paramètre comparatif.

4. Procédé de suppression d'effet POGO suivant l'une quelconque des revendications précédentes, dans lequel, si le premier critère de référence n'est pas rempli par l'ensemble des différences actuelles mais est rempli par l'ensemble de différences pour un seul palier alternatif, une transition de l'accumulateur hydraulique (8) est commandée vers le seul palier alternatif remplissant complètement le premier critère de référence.

5. Procédé de suppression d'effet POGO suivant l'une quelconque des revendications précédentes, dans lequel ledit premier critère de référence est que chacune des différences dudit ensemble des différences soit supérieure à un seuil prédéterminé.

6. Procédé de suppression d'effet POGO suivant l'une quelconque des revendications précédentes, comprenant, si ledit premier critère de référence n'est rempli pour aucun palier, en cours ou alternatif, mais qu'un deuxième critère de référence est rempli pour un ensemble de paliers alternatifs, une transition de l'accumulateur hydraulique (8) est commandée vers un palier alternatif, sélectionné parmi l'ensemble de paliers alternatifs pour lesquels le deuxième critère de référence est rempli, et pour lequel un paramètre comparatif, calculé en fonction de l'ensemble de différences correspondant, présente une valeur maximale.

7. Procédé de suppression d'effet POGO suivant la revendication 5, dans lequel, si aucun desdits premier ou deuxième critère de référence n'est rempli pour aucun palier, en cours ou alternatif, une transition alternée est commandée entre au moins deux des paliers en cours et alternatifs.

8. Procédé de suppression d'effet POGO suivant l'une quelconque des revendications 1 à 7, dans lequel ledit deuxième critère de référence est que chacune des différences dudit ensemble des différences soit supérieure à un seuil prédéterminé.

9. Procédé de suppression d'effet POGO suivant l'une quelconque des revendications précédentes, dans lequel, si ledit premier critère de référence est rempli par chaque ensemble de différences d'une pluralité des paliers alternatifs, on détermine que, pendant la transition de l'accumulateur hydraulique (8) du palier actuel à un palier alternatif sélectionné parmi lesdits paliers alternatifs pour lesquels le premier critère de référence est rempli, aucune fréquence de résonance hydraulique ne croisera aucune fréquence de résonance mécanique actuelle suivant les étapes suivantes :
déterminer, pour chaque mode dudit ensemble de modes de résonance hydraulique, une fréquence de résonance hydraulique minimum et une fréquence de résonance hydraulique maximum parmi la fréquence de résonance hydraulique pour le palier actuel et la fréquence de résonance hydraulique pour le palier alternatif sélectionné,
comparer, pour chaque mode dudit ensemble de modes de résonance hydraulique, la fréquence de résonance hydraulique minimale et la fréquence de résonance hydraulique maximale avec la fréquence de résonance mécanique actuelle pour chaque mode de résonance mécanique dudit ensemble de modes de résonance mécanique, aucune fréquence de résonance hydraulique ne pouvant croiser aucune fréquence de résonance mécanique actuelle pendant la transition au palier alternatif sélectionné si, pour aucun desdits modes de résonance hydraulique et mécanique, la fréquence de résonance hydraulique minimale est inférieure à la fréquence de résonance mécanique et la fréquence de résonance hydraulique maximale est supérieure à la fréquence de résonance mécanique.

10. Engin (1) comprenant au moins :
un moteur à réaction (2), et
un système d'alimentation (4) dudit moteur (2) en au moins un ergol liquide, ledit système d'alimentation (4) étant équipé d'un accumulateur hydraulique (8), permettant de sélectionner entre plusieurs paliers de fonctionnement prédéterminés correspondant chacun à un volume différent de gaz dans l'accumulateur hydraulique (8), et d'une unité de commande (30) configurée pour effectuer un procédé de suppression d'effet POGO suivant l'une quelconque des revendications précédentes.

## Patentansprüche

1. Verfahren zur Unterdrückung eines POGO-Effektes an einem Gerät (1), das wenigstens ein Strahltriebwerk (2) und ein System zur Versorgung (4) des Triebwerks (2) mit wenigstens einem flüssigen Treibstoff umfasst, wobei das Versorgungssystem mit einem hydraulischen Akkumulator (8) ausgestattet ist, der ermöglicht, zwischen mehreren vorbestimmten Betriebsstufen auszuwählen, die jeweils einem unterschiedlichen Gasvolumen in dem hydraulischen Akkumulator (8) entsprechen, wobei das Verfahren die folgenden Schritte umfasst:
Berechnen einer aktuellen hydraulischen Resonanzfrequenz für jede Mode einer Menge von hydraulischen Resonanzmoden des Versorgungssystems (4) mit einer laufenden Stufe des Akkumulators (8) aus den vorbestimmten Stufen,
Berechnen einer alternativen hydraulischen Resonanzfrequenz für jede Mode der Menge von hydraulischen Resonanzmoden des Versorgungssystems (4), wobei jede Stufe der vorbestimmten Stufen eine Alternative zu der laufenden Stufe ist,
Berechnen einer aktuellen Differenz zwischen jeder aktuellen hydraulischen Resonanzfrequenz und einer aktuellen mechanischen Resonanzfrequenz für jede Mode einer Menge von mechanischen Resonanzmoden einer Struktur das Gerätes, und, wenn ein erstes Referenzkriterium nicht von allen aktuellen Differenzen erfüllt ist:
Berechnen einer Menge von Differenzen zwischen jeder alternativen hydraulischen Resonanzfrequenz und jeder aktuellen mechanischen Resonanzfrequenz für jede alternative Stufe und, wenn das erste Referenzkriterium von jeder Menge von Differenzen von einer Vielzahl von alternativen Stufen erfüllt ist:
Steuern eines Übergangs des hydraulischen Akkumulators (8) von der laufenden Stufe zu einer alternativen Stufe, die aus den alternativen Stufen, für die das erste Referenzkriterium erfüllt ist, ausgewählt ist und für die keine hydraulische Resonanzfrequenz irgendeine aktuelle mechanische Resonanzfrequenz während des Übergangs kreuzt.

2. Verfahren zur Unterdrückung eines POGO-Effektes nach Anspruch 1, bei dem, wenn der hydraulische Akkumulator (8) von der laufenden Stufe zu irgendeiner von mehreren alternativen Stufen, unter denjenigen, für die das erste Referenzkriterium erfüllt ist, übergehen kann, ohne dass eine hydraulische Resonanzfrequenz irgendeine aktuelle mechanische Resonanzfrequenz während des Übergangs kreuzt, der Übergang zu einer alternativen Stufe gesteuert wird, die aus denjenigen ausgewählt ist, für welche das erste Referenzkriterium erfüllt ist und zu welchen der Übergang keinerlei Frequenzkreuzung zur Folge hat, und für die ein Vergleichsparameter, welcher in Abhängigkeit von der entsprechenden Differenzmenge berechnet wird, einen maximalen Wert aufweist.

3. Verfahren zur Unterdrückung eines POGO-Effektes nach Anspruch 2, bei dem, wenn eine Vielzahl von alternativen Stufen, unter denjenigen, für die das erste Referenzkriterium erfüllt ist und zu denen der Übergang keinerlei Frequenzkreuzung zur Folge hat, einen gleichen maximalen Wert des Vergleichsparameters aufweisen, der Übergang zu einer alternativen Stufe mit einem maximalen Rang entsprechend einer vorbestimmten Reihenfolge, unter denjenigen, für die das erste Referenzkriterium erfüllt ist, zu denen der Übergang keinerlei Frequenzkreuzung zur Folge hat und die den gleichen maximalen Wert des Vergleichsparameters aufweisen, gesteuert wird.

4. Verfahren zur Unterdrückung eines POGO-Effektes nach einem der vorhergehenden Ansprüche, bei dem, wenn das erste Referenzkriterium nicht von allen aktuellen Differenzen erfüllt ist, aber von der Menge von Differenzen für eine einzige alternative Stufe erfüllt ist, ein Übergang des hydraulischen Akkumulators (8) zu der einzigen alternativen Stufe, die das erste Referenzkriterium vollständig erfüllt, gesteuert wird.

5. Verfahren zur Unterdrückung eines POGO-Effektes nach einem der vorhergehenden Ansprüche, bei dem das erste Referenzkriterium darin besteht, dass eine jede der Differenzen der Menge der Differenzen größer als ein vorbestimmter Schwellwert ist.

6. Verfahren zur Unterdrückung eines POGO-Effektes nach einem der vorhergehenden Ansprüche, bei dem, wenn das erste Referenzkriterium für keine Stufe, laufend oder alternativ, erfüllt ist, aber ein zweites Referenzkriterium für eine Menge von alternativen Stufen erfüllt ist, ein Übergang des hydraulischen Akkumulators (8) zu einer alternativen Stufe gesteuert wird, die aus der Menge von alternativen Stufen ausgewählt ist, für welche das zweite Referenzkriterium erfüllt ist, und für die ein Vergleichsparameter, welcher in Abhängigkeit von der entsprechenden Differenzmenge berechnet wird, einen maximalen Wert aufweist.

7. Verfahren zur Unterdrückung eines POGO-Effektes nach Anspruch 5, bei dem, wenn keines der ersten oder zweiten Referenzkriterien für irgendeine Stufe, laufend oder alternativ, erfüllt ist, ein abwechselnder Übergang zwischen wenigstens zwei der laufenden und alternativen Stufen gesteuert wird.

8. Verfahren zur Unterdrückung eines POGO-Effektes nach einem der Ansprüche 1 bis 7, bei dem das zweite Referenzkriterium darin besteht, dass eine jede der Differenzen der Menge der Differenzen größer als ein vorbestimmter Schwellwert ist.

9. Verfahren zur Unterdrückung eines POGO-Effektes nach einem der vorhergehenden Ansprüche, bei dem, wenn das erste Referenzkriterium von jeder Differenzmenge einer Vielzahl der alternativen Stufen erfüllt ist, bestimmt wird, dass während des Übergangs des hydraulischen Akkumulators (8) von der aktuellen Stufe zu einer alternativen Stufe, ausgewählt aus den alternativen Stufen, für die das erste Referenzkriterium gefüllt ist, keine hydraulische Resonanzfrequenz irgendeine aktuelle mechanische Resonanzfrequenz kreuzt, gemäß folgender Schritte:
Bestimmen - für jede Mode der Menge von hydraulischen Resonanzmoden - einer minimalen hydraulischen Resonanzfrequenz und einer maximalen hydraulischen Resonanzfrequenz aus der hydraulischen Resonanzfrequenz für die aktuelle Stufe und der hydraulischen Resonanzfrequenz für die ausgewählte alternative Stufe,
Vergleichen - für jede Mode der Menge von hydraulischen Resonanzmoden - der minimalen hydraulischen Resonanzfrequenz und der maximalen hydraulischen Resonanzfrequenz mit der aktuellen mechanischen Resonanzfrequenz für jede mechanische Resonanzmode der Menge von mechanischen Resonanzmoden, wobei keinerlei hydraulische Resonanzfrequenz irgendeine aktuelle mechanische Resonanzfrequenz während des Übergangs zu der ausgewählten alternativen Stufe kreuzen kann, wenn für keine der hydraulischen und mechanischen Resonanzmoden die minimale hydraulische Resonanzfrequenz kleiner als die mechanische Resonanzfrequenz ist und die maximale hydraulische Resonanzfrequenz größer als die mechanische Resonanzfrequenz ist.

10. Gerät (1), das wenigstens umfasst:
ein Strahltriebwerk (2) und
ein System zur Versorgung (4) des Triebwerks (2) mit wenigstens einem flüssigen Treibstoff, wobei das Versorgungssystem (4) mit einem hydraulischen Akkumulator (8), der ermöglicht, zwischen mehreren vorbestimmten Betriebsstufen auszuwählen, die jeweils einem unterschiedlichen Gasvolumen in dem hydraulischen Akkumulator (8) entsprechen, und mit einer Steuerungseinheit (30) ausgestattet ist, die dazu ausgelegt ist, ein Verfahren zur Unterdrückung eines POGO-Effektes nach einem der vorhergehenden Ansprüche durchzuführen.

## Claims

1. A method of suppressing the pogo effect on a vehicle (1) having at least one reaction engine (2) and a feed system (4) for feeding said engine (2) with at least one liquid propellant, said feed system being fitted with a hydraulic accumulator (8) capable of selecting between a plurality of predetermined operating levels, each corresponding to a different volume of gas in the hydraulic accumulator (8), the method comprising the following steps:
• calculating a current hydraulic resonant frequency for each mode of a set of hydraulic resonance modes of said feed system (4) with a current level of said accumulator (8) from among said predetermined levels;
• calculating an alternative hydraulic resonant frequency for each mode of said set of hydraulic resonance modes of said feed system (4) with each level of the predetermined levels that is an alternative to the current level;
• calculating a current difference between each current hydraulic resonant frequency and a current mechanical resonant frequency for each mode of a set of mechanical resonance modes of a structure of said vehicle, and if a first reference criterion is not satisfied by all of the current differences:
• calculating a set of differences between each alternative hydraulic resonant frequency and each current mechanical resonant frequency for each alternative level, and if said first reference criterion is satisfied by each set of differences of a plurality of alternative levels:
• ordering the hydraulic accumulator (8) to make a transition from the current level to an alternative level selected from among said alternative levels for which the first reference criterion is satisfied, and for which no hydraulic resonant frequency crosses any current mechanical resonant frequency during the transition.

2. A method of suppressing the pogo effect according to claim 1, wherein, if the hydraulic accumulator (8) can pass from the current level to any of a plurality of alternative levels, from among those for which the first reference criterion is satisfied, without any hydraulic resonant frequency crossing any current mechanical resonant frequency during the transition, then said transition is ordered to an alternative level selected from among those for which the first reference criterion is satisfied and for which the transition does not involve any frequencies crossing, and for which a comparative parameter, calculated as a function of the corresponding set of differences, presents a maximum value.

3. A method of suppressing the pogo effect according to claim 2, wherein, if a plurality of alternative levels from among those for which the first reference criterion is satisfied and to which the transition would not involve any frequency crossing present the same maximum value for said comparative parameter, said transition is ordered to an alternative level having a maximum rank in a predetermined order, from among those for which the first reference criterion is satisfied to which the transition does not involve any frequency crossing, and presenting the same maximum value for the comparative parameter.

4. A method of suppressing the pogo effect according to any preceding claim, wherein, if the first reference criterion is not satisfied by all of the current differences but is satisfied by all of the differences for a single alternative level, the hydraulic accumulator (8) is ordered to make a transition to the only alternative level that completely satisfies the first reference criterion.

5. A method of suppressing the pogo effect according to any preceding claim, wherein said first reference criterion is that each of the differences of each set of differences is greater than a predetermined threshold.

6. A method of suppressing the pogo effect according to any preceding claim, comprising, if said first reference criterion is not satisfied by any level, whether current or alternative, but a second reference criterion is satisfied for a set of alternative levels, ordering the hydraulic accumulator (8) to make a transition to an alternative level selected from all of the alternative levels for which the second reference criterion is satisfied, and for which a comparative parameter, calculated as a function of the corresponding set of differences presents a maximum value.

7. A method of suppressing the pogo effect according to claim 5, wherein, if neither of said first and second reference criteria is satisfied for any level, whether current or alternative, then an alternating transition is ordered between at least two current and alternative levels.

8. A method of suppressing the pogo effect according to any one of claims 1 to 7, wherein said second reference criterion is that each of the differences of said set of differences is greater than a predetermined threshold.

9. A method of suppressing the pogo effect according to any preceding claim, wherein, if said first reference criterion is satisfied for each set of differences of a plurality of alternative levels, it is determined that no hydraulic resonant frequency will cross any current mechanical resonant frequency during the transition of the hydraulic accumulator (8) from the current level to an alternative level selected from among said alternative levels for which the first reference criterion is satisfied, by performing the following steps:
• determining, for each mode of said set of hydraulic resonance modes, a minimum hydraulic resonant frequency and a maximum hydraulic resonant frequency from the hydraulic resonant frequency for the current level and from the hydraulic resonant frequency for the selected alternative level; and
• comparing, for each mode of said set of hydraulic resonance modes, the minimum hydraulic resonant frequency and the maximum hydraulic resonant frequency with the current mechanical resonant frequency for each mechanical resonance mode of said set of mechanical resonance modes, it not being possible for any hydraulic resonant frequency to cross any current mechanical resonant frequency during the transition to the selected alternative level if, for none of said hydraulic and mechanical resonance modes, the minimum hydraulic resonant frequency is less than the mechanical resonant frequency and the maximum hydraulic resonant frequency is greater than the mechanical resonant frequency.

10. A vehicle (1) comprising at least:
• a reaction engine (2); and
• a feed system (4) for feeding said engine (2) with at least one liquid propellant, said feed system (4) being provided with a hydraulic accumulator (8) enabling a selection to be made between a plurality of predetermined operating levels each corresponding to a different volume of gas in the hydraulic accumulator (8), and a control unit (30) configured to perform the pogo effect suppressing method according to any preceding claim.
